# EUROPÄISCHE PATENTSCHRIFT

(11) **EP 1 170 552 B1**
(45) Veröffentlichungstag und Bekanntmachung des Hinweises auf die Patenterteilung: **26.07.2006**
(21) Anmeldenummer: 01115543.9
(22) Anmeldetag: 28.06.2001
(51) Int. Cl.: F24D 3/10, F24D 19/10, F16L 41/03

(54) **Vorrichtung zum Verteilen von Flüssigkeiten**
Device for distributing liquids
Dispositif de distribution de liquides

(30) Priorität: 05.07.2000 DE 20011693 U; 19.08.2000 DE 20014320 U
(43) Veröffentlichungstag der Anmeldung: 09.01.2002
(73) Patentinhaber: Watts Industries Deutschland Gesellschaft mit beschränkter Haftung, 76829 Landau (DE)
(72) Erfinder: Schehl, Ulrich, 76855 Annweiler (DE)
(74) Vertreter: Patentanwälte Möll und Bitterich

(56) Entgegenhaltungen:
- EP-A- 0 903 543
- DE-A- 4 030 142
- DE-C- 19 652 117
- DE-U- 29 704 960

## Beschreibung

### Technisches Gebiet:

Die Erfindung betrifft eine Vorrichtung zum Verteilen von Flüssigkeiten, insbesondere Wasser, bei Trink- und Brauchwasseranlagen, Warmwasser-Heizungsanlagen oder dergleichen, mit einem Verteilerrohr und mit mindestens einem radial zu dem Verteilerrohr angeordneten Anschluss für eine Abgangsleitung sowie mit einem dieser achsparallel zugeordneten Absperrventil aus einem Ventilunterteil, das eine Führung für die mittels eines Handrades betätigbare Ventilspindel mit dem Ventilkopf bildet und einem diesem gegenüberliegenden Ventiloberteil, an dem der Ventilsitz gebildet ist.

### Stand der Technik:

Bei Sanitärinstallationen in der Gebäudetechnik befindet sich üblicherweise nach der Druckminder- und/oder Filtereinheit eine Verteilerstation, an der von einem Verteilerrohr die Leitungen zu den einzelnen Stockwerken bzw. Verbrauchern des Gebäudes abzweigen. Da Trinkwasserleitungen üblicherweise im Keller in die Gebäude hineingeführt werden, erstrecken sich die Abgangsleitungen von dem Verteilerrohr regelmäßig nach oben.

Diese Verteilerrohre sind meist Rohrabschnitte mit angesetzten Rohrstutzen, auf die übliche Ventile, meist Schrägventile, aufgeschraubt werden. Im Bereich einer solchen Verteilerstation wird jeder Abgangsleitung ein Absperrventil zugeordnet; außerdem muss ein Entleerventil vorgesehen sein, um die betreffende Abgangsleitung in geschlossenem Zustand des Absperrventils entleeren zu können. Abgesehen vom Aufwand für die Installation solcher Verteilerstationen ist in der Regel auch der Platzbedarf für solche Schrägventile sehr groß.

### Darstellung der Erfindung:

Vor diesem Hintergrund liegt der Erfindung die Aufgabe zugrunde, eine wirtschaftlichere und vor allem platzsparendere Möglichkeit für die Gestaltung einer derartigen Verteilerstation zu finden.

Gemäß der Erfindung wird diese Aufgabe durch eine Vorrichtung mit den Merkmalen des unabhängigen Anspruchs 1 gelöst.

Vorteilhafte Weiterbildungen ergeben sich aus den abhängigen Ansprüchen.

Ausgangsbasis der Erfindung ist der Gedanke, das bislang nur bei sogenannten Heizkreisverteilern von Heizungsanlagen befolgte Prinzip, Einstell- bzw.
Regelventile in das Verteilerrohr zu integrieren, auch bei einem Sanitärverteiler anzuwenden. Während es bei Heizkreisverteilern zweckmäßig und daher üblich ist, die Ventile so zu montieren, dass die zur Betätigung erforderlichen Handräder, Stellantriebe, Stellmotoren oder dergleichen oberhalb des Verteilerrohrs liegen (wie in der gattungsbildenden Veröffentlichung EP 0 903 543 A2), ist es bei einer Verteilerstation im Sanitärbereich sinnvoll, das Absperrventil für eine vom Verteilerrohr nach oben abzweigende Abgangsleitung mit dieser achsparallel unterhalb des Verteilerrohres anzuordnen; dies ermöglicht auch eine geringe Bautiefe.

Ebenfalls bei Heizungsanlagen ist ein Heizungsventil mit Voreinstellung in Einlochbefestigung bekannt geworden, das eine mit einer axialen Bohrung versehene Ventilspindel besitzt, durch die einerseits eine Druckmessung erfolgen bzw. durch die andererseits auch die Leitung entleert werden kann (DE 40 30 142 A1). Bei diesem Ventil wird zum Entleeren der Leitung auf die Ventilspindel eine besondere Entleervorrichtung aufgesetzt, an der ein in die Hohlspindel hineinreichendes Entleerrohr gehalten ist. Mittels einer Verstellmutter wird eine Axialverschiebung des innerhalb der Hohlspindel beweglichen Entleerrohres bewirkt, die ihrerseits eine Axialverschiebung eines Entleerkegels gegen eine durch eine Ventilfeder belastete Ventilkugel zur Folge hat und so zwischen Entleerkegel und Entleerrohr seitliche Entleerkanäle freigibt.

Vor diesem Hintergrund eröffnet die Erfindung bei einer Sanitärinstallation die Möglichkeit, das bisher gesondert vorzusehende Ventil für die Entleerung der Abgangsleitung auf einfache Weise in das Absperrventil zu integrieren. Dies hat bei der gezeigten Konfiguration noch den weiteren Vorteil, dass das Entleerventil und damit auch die Entleeröffnung am tiefsten Punkt der Leitung liegen, so dass diese vollständig entleert werden kann. Da der Austritt der Flüssigkeit aus der zu entleerenden Abgangsleitung ebenfalls nach unten erfolgt, kann die Entleerung unmittelbar in eine unterhalb des Verteilers angeordnete Auffangschale erfolgen.

Eine besonders vorteilhafte Ausführung besteht darin, dass zur Betätigung des Absperrventils erforderliche Handrad aus zwei Teilen auszubilden, von denen der eine, innere Teil der Betätigung des Absperrventils und der zweite, äußere Teil der Betätigung des Entleerventils dient, so dass besondere Schlüssel oder Werkzeuge nicht erforderlich sind.

### Kurze Beschreibung der Zeichnung:

Weitere Merkmale und vorteilhafte Eigenschaften der Erfindung ergeben sich aus der nachstehenden Beschreibung der in der Zeichnung dargestellten Ausführungsbeispiele. Es zeigt
- Fig. 1: einen Schnitt durch eine erfindungsgemäße Verteilervorrichtung mit einem Absperrventil,
- Fig. 2: einen Längsschnitt durch die Ventilspindel gemäß Fig. 1 in größerem Maßstab,
- Fig. 3: eine Ansicht einer Verteilerstation mit mehreren Absperrventilen,
- Fig. 4: einen Querschnitt entlang der Linie IV-IV in Fig. 3, die
- Fig. 5 und 6 der Fig. 1: entsprechende Darstellungen einer anderen Ausführungsform in unterschiedlichen Betriebszuständen,
- Fig. 7: einen Querschnitt entlang der Linie VII-VII in Fig. 6,
- Fig. 8: eine Ansicht des Absperrventils gemäß Fig. 6 in Entleerstellung und
- Fig. 9: eine stark vergrößerte Darstellung des Ventilkopfes des Absperrventils gemäß Detail X in Fig. 5.

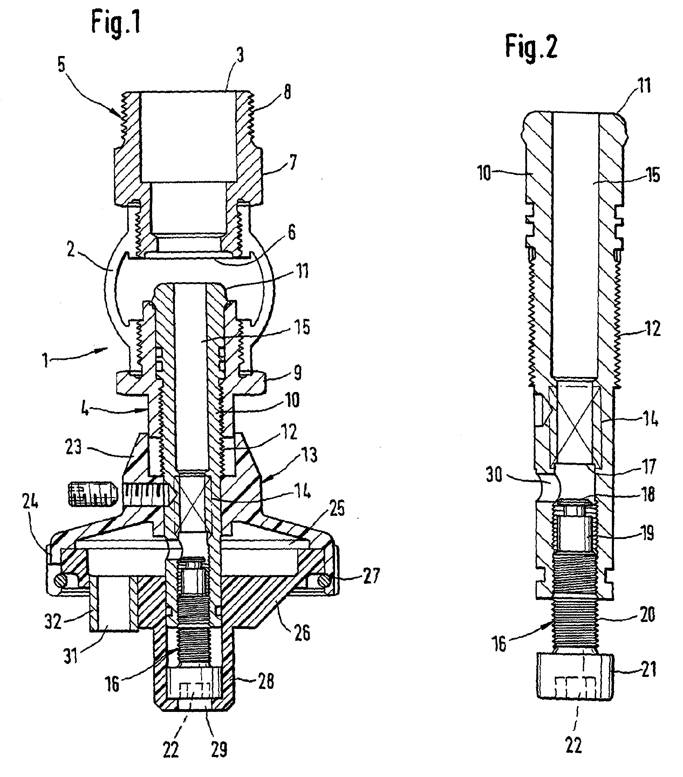

Fig. 1 zeigt einen Längsschnitt durch eine Ausführungsform einer erfindungsgemäßen Vorrichtung, bei der ein Absperrventil 1 in einen Verteiler mit einem Verteilerrohr 2 integriert ist, von dem ein Rohrstutzen 3 für den Anschluss einer Abgangsleitung abzweigt. Demgemäß umfasst das Absperrventil 1 zwei Teile, ein Ventilunterteil 4 und ein Ventiloberteil 5, die sich bezüglich des Verteilerrohres 2 achsparallel zur Abgangsleitung gegenüberliegen.

Das Ventiloberteil 5 bildet an dem unteren, in das Verteilerrohr 2 eingeschraubten Ende des Rohrstutzens 3 einen Ventilsitz 6; es ist in seinem darüberliegenden Bereich außen mit einer Mutternkontur 7 versehen und besitzt im oberen Bereich ein Außengewinde 8 zum Anschluss der - nicht dargestellten - Abgangsleitung. Das Ventilunterteil 4 ist mit dem oberen Ende eines Rohrstutzens in das Verteilerrohr 2 eingeschraubt; es ist ebenfalls mit einer Mutternkontur 9 versehen und dient als Führung für die Ventilspindel 10 des Absperrventils 1.

Die Spindel 10 des Absperrventils 1 besitzt an ihrem oberen Ende einen Ventilkopf 11, der zum Absperren der Abgangsleitung mit dem Ventilsitz 6 des Ventiloberteils 5 zusammenwirkt; sie besitzt im mittleren Bereich entlang ihres Schaftes ein Außengewinde 12, mittels dessen sie innerhalb des mit einem entsprechenden Innengewinde ausgestatteten Ventilunterteils 4 schraubbar ist und trägt an ihrem unteren Ende zur Einleitung des dafür erforderlichen Drehmoments ein Handrad 13. Das Handrad 13 ist drehfest auf die Spindel 10 aufgesteckt, was beispielsweise durch eine vierkantige Ausgestaltung 14 des mittleren Schaftteils der Spindel 10 bewerkstelligt sein kann, und gegenüber der Spindel 10 durch eine Feststellschraube fixiert.

Erfindungsgemäß besitzt die Spindel 10 des Absperrventils 1 eine axiale durchgehende Bohrung 15, die bei geschlossenem Absperrventil 1 zum Entleeren der Abgangsleitung dient. Zum Verschließen und Öffnen dieser Entleerleitung ist in die Bohrung 15 ein Entleerventil 16 eingesetzt, dessen Zusammenwirken mit dem Absperrventil 1 anhand Fig. 2 besser erläutert werden kann, welche die Spindel 10 und das Entleerventil 16 in etwas größerem Maßstab zeigt.

Für das Entleerventil 16 ist im Verlauf der axialen Bohrung 15 der Spindel 10 durch eine Schulter 17 ein Ventilsitz gebildet. Gegen diesen Ventilsitz wirkt der Ventilkopf 18 des Entleerventils 16, der am oberen Ende einer Ventilspindel 19 angeordnet ist. Auch die Spindel 19 des Entleerventils 16 weist entlang ihres Schaftes ein Außengewinde 20 auf, mittels dessen sie entlang eines entsprechenden Innengewindes im unteren Bereich der Bohrung 15 längsverstellbar ist. Zur Einleitung der dazu erforderlichen Drehbewegung besitzt die Spindel 19 am unteren Ende einen Fuß 21, der stirnseitig einen Schlitz zum Ansetzen eines Schraubendrehers oder, wie dargestellt, eine Vertiefung 22 mit polygonalem Querschnitt zum Beispiel nach Art einer Inbusschraube aufweisen kann.

Das Handrad 13 besteht, wie wiederum Fig. 1 erkennen lässt, aus einem äußeren Teil 23, das die verdrehsichere Verbindung mit der Ventilspindel 10 bewirkt und als Massivteil etwa schüsselförmig zu einem Rändelring 24 hin aufgeweitet ist. Dadurch entsteht innerhalb dieses äußeren Teils 23 ein Hohlraum 25, der nach außen hin durch ein inneres Deckelteil 26 abgeschlossen ist. Das Deckelteil 26 ist in den Rändelring 24 so eingesetzt, dass es gegenüber dem äußeren Teil 23 um die Ventilachse gedreht werden kann; die Verbindung kann durch einen Sprengring 27 gesichert sein. Die beiden Teile 23 und 26 des Handrades bestehen zweckmäßig aus Kunststoff.

Das Deckelteil 26 besitzt, wie Fig. 1 weiterhin erkennen lässt, einen Gehäuseansatz 28, der als Schutz und Führung für den Kopf 21 der Spindel 19 des Entleerventils 16 dient. Durch eine stirnseitige Durchbrechung 29 ist die Vertiefung 22 zugänglich, zum Beispiel zum Ansetzen eines Werkzeuges.

Im Betriebszustand der Vorrichtung ist das Entleerventil 16 geschlossen, d.h. liegt der Ventilkopf 18, der noch durch einen in eine Ringnut eingelegten O-Ring unterstützt sein kann, an dem Ventilsitz 17 an; das Absperrventil 1 ist geöffnet, so dass Wasser aus dem Verteilerrohr 2 in die Abgangsleitung strömen kann. Soll die Abgangsleitung entleert werden, dann wird zunächst das Absperrventil 1 geschlossen und danach das Entleerventil 16 geöffnet. Dadurch wird eine im Schaft der Spindel 10 unterhalb des Ventilsitzes 17 angeordnete Querbohrung 30 frei, die in den Hohlraum 25 des Handrades 13 mündet, so dass Wasser aus der Abgangsleitung in diesen austreten kann. Zur Ausleitung des auf diese Weise austretenden Wassers ist im Deckelteil 26 mindestens eine Entleeröffnung 31 vorgesehen, die durch einen kleinen zylindrischen Einsatz 32 gebildet sein kann. Durch die Verdrehbarkeit des Deckelteils 26 gegenüber dem äußeren Teil 23 des Handrades 13 kann die Entleeröffnung 31 auf einem Kreisring in eine für den Wasseraustritt günstige Position verschwenkt werden.

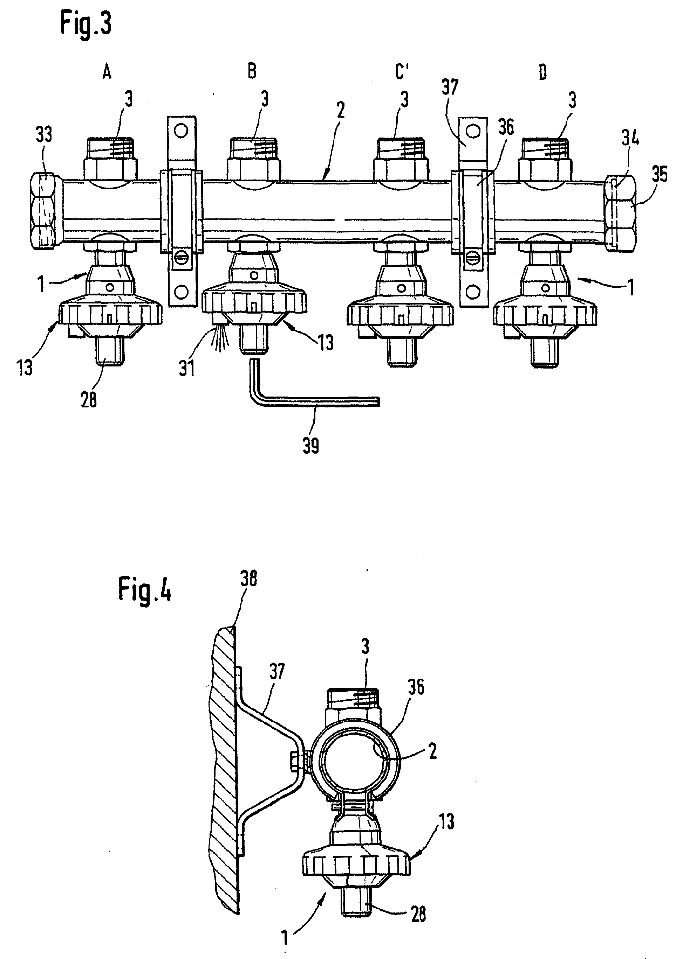

In Fig. 3 ist eine Ansicht einer Verteilerstation dargestellt, die an einem Verteilerrohr 2 insgesamt vier erfindungsgemäß ausgebildete Absperrventile 1 an den Positionen A, B, C und D umfasst. Das Verteilerrohr 2 ist an dem in der Darstellung linken Ende mit einem Außengewinde 33 und an dem gegenüberliegenden Ende mit einer Außenbördelung 34 und einer Überwurfmutter 35 versehen. Das Verteilerrohr 2 kann, wie Fig. 4 erkennen lässt, mittels einer Rohrschelle 36 und eines Bügels 37 an einer Wand 38 befestigt werden. Aus dieser Darstellung ist deutlich die geringe Bautiefe der erfindungsgemäßen Vorrichtung erkennbar.

Bei der in Fig. 3 dargestellten Verteilerstation ist das Verteilerrohr 2 einteilig ausgebildet, d.h. es umfasst an den Positionen A, B, C und D insgesamt vier Absperrventile 1. Die gesamte Vorrichtung kann aber auch modular aufgebaut sein, d.h. es können beliebig kombinierbare Verteilersegmente mit einem, zwei, drei oder vier Abgängen vorgesehen sein.

In Fig. 3 ist weiterhin angedeutet, wie durch das Absperrventil 1 in der Position B die Zweigleitung abgeschlossen wurde und wie zum Beispiel mittels eines Inbusschlüssels 39 das innerhalb des Handrades 13 verlaufende Entleerventil 16 geöffnet wurde, so dass aus der Entleeröffnung 31 Wasser heraustritt.

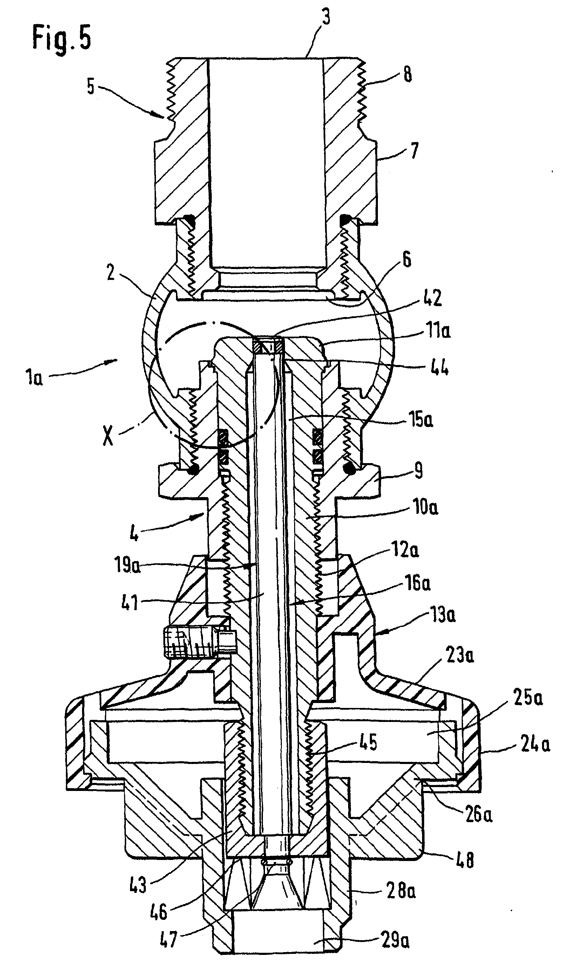

In den Fig. 5 bis 8 ist eine andere Ausführungsform für ein erfindungsgemäßes Absperrventil mit integrierter Entleermöglichkeit für die zugeordnete Abgangsleitung dargestellt. Im Prinzip entspricht die Anordnung des Absperrventils 1 a demjenigen gemäß Fig. 1, jedenfalls was Ausgestaltung und Anordnung des Verteilerrohrs 2, des Ventilunterteils 4 und des Ventiloberteils 5 anlangt. Auch hier ist zur Betätigung des Absperrventils 1 mit der Ventilspindel 10a ein Handrad 13a vorgesehen, das aus einem äußeren Teil 23a und einem inneren Deckelteil 26a besteht; letzteres besitzt wiederum einen Gehäuseansatz 28a mit einer stirnseitigen Durchbrechung 29a. Das äußere Teil 23a und das innere Teil 26a des Handrades 13a sind durch Einrasten ringförmiger Vorsprünge an den äußeren bzw. inneren Rändern gegeneinander verdrehbar miteinander verbunden.

Bei dieser Ausführungsform besteht die Spindel 19a des Entleerventils 16a aus einer Ventilstange 41, die an ihrem oberen Ende den Ventilkopf 42 aufweist und die an ihrem unteren Ende zug- und druckfest, aber frei drehbar in einem Fuß 43 gehalten ist. Die Spindel 10a des Absperrventils 1a weist die mit dem Ventilkopf 42 des Entleerventils 16a zusammenwirkende Verengung 44 der Bohrung 15a am Ventilkopf 11a auf, und zwar so, dass der Verschlusskörper 42 in geschlossenem Zustand des Entleerventils mit der Oberfläche des Ventilkopfes 11 fluchtet (Fig. 5).

Der Fuß 43 der Spindel 19a des Entleerventils 16a ist etwa becherartig ausgebildet. Er hat polygonförmigen, zum Beispiel sechseckigen Querschnitt, und ist so in dem ebenfalls sechseckigen Innenraum des Gehäuseansatzes 28a drehfest, aber längsverschieblich aufgenommen. Der Fuß 43 besitzt ein Innengewinde 45, mit dem er auf ein entsprechendes Außengewinde am unteren Ende der Spindel 10a des Absperrventils 1a aufschraubbar ist und weist in seinem Bodenteil eine Durchbrechung 46 auf, die von der Ventilstange 41 durchsetzt wird. Die Ventilstange 41 ist zug- und druckfest, zum Beispiel durch einen von außen in eine Ringnut eingesetzten Sprengring 47 mit dem Fuß 43 verbunden.

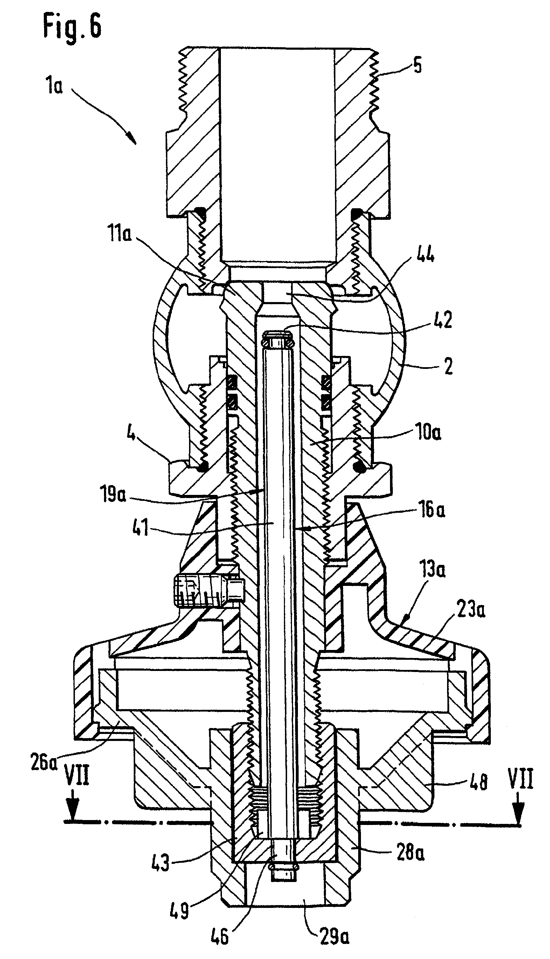

Fig. 5 zeigt das Absperrventil 1a in geöffneter und das Entleerventil 16a in geschlossener Stellung, Fig. 6 das Absperrventil 1a in geschlossener und das Entleerventil 16a in geöffneter Stellung.

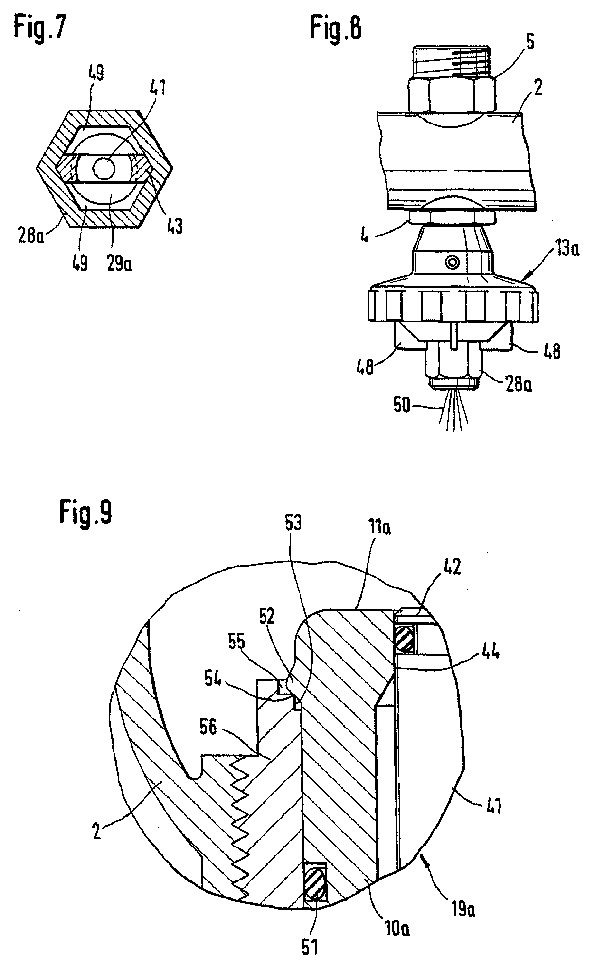

Während die Betätigung der Spindel 10a des Absperrventils 1a durch das äußere Teil 23a des Handrades 13a erfolgt, das mit der Spindel 10a drehfest verbunden ist, kann bei dieser Ausführungsform die Betätigung der Spindel 19a des Entleerventils 16a durch das innere Deckelteil 26a des Handrades 13a erfolgen, das über den in dem Gehäuseansatz 28a drehfest, aber längsverschieblich gehaltenen Fuß 43 und die Gewindeverbindung 45 eine Längsbewegung der Ventilstange 41 ermöglicht. Zur Verdrehung des Deckelteils 26a gegenüber dem äußeren Teil 23a ist es mit Flügeln 48 versehen, die vor allem in der Ansicht der Fig. 8 deutlich zu erkennen sind.

Der insgesamt mutternartig ausgebildete Fuß 43 besitzt in seinem unteren Bereich einander gegenüberliegend seitliche Ausfräsungen. Durch diese Ausfräsungen werden einander gegenüberliegende Fenster 49 gebildet, durch die das aus der Abgangsleitung ausfließende Wasser austreten und durch die Durchbrechung 29a im Gehäuseansatz 28a abfließen kann (Fig. 7). Der austretende Wasserstrahl ist in Fig. 8 bei 50 angedeutet.

Eine vergrößerte Darstellung der Dichtungen zwischen dem Kopf 42 der Ventilstange 41 und dem Ventilkopf 11a einerseits sowie zwischen diesem und dem in das Verteilerrohr 2 hineinragenden Rohrstutzen andererseits zeigt Fig. 9 als Detail X in Fig. 5. Der für die Längsverschiebung der Ventilspindel 10a des Absperrventils 1a erforderliche Spalt zwischen der Außenfläche der Ventilspindel 10a und der Spindelführung am Ventilunterteil 4 kann in an sich bekannter Weise durch Dichtringe 51 gedichtet werden. Da das Absperrventil 1a aber während der längsten Zeit des Betriebes der Verteilervorrichtung geöffnet sein wird, d.h. von Wasser beaufschlagt ist, ist es sinnvoll, im oberen Bereich dieses Spaltes eine zusätzliche Dichtung vorzusehen.

Wie insbesondere Fig. 9 erkennen lässt, ist der Ventilkopf 11a des Absperrventils 1a rückseitig mit einer Verdickung 52 versehen, die eine zur zylindrischen Außenfläche der Ventilspindel 19a geneigt verlaufende Dichtfläche 53 bildet. Diese schräge Dichtfläche 53 wirkt mit einer Dichtkante 54 zusammen, die an einer treppenartigen Ausnehmung 55 am oberen Innenrand des Rohrstutzens 56 gebildet ist, der den in das Verteilerrohr 2 hineinragenden Teil des Ventilunterteils 4 bildet und an dem die Spindelführung ausgebildet ist. Durch diese metallische Dichtung wird der Spalt zwischen der Spindel 10a und der Spindelführung im Rohrstutzen 56 am oberen Ende abgedichtet; dadurch kann vermieden werden, dass sich in dem Spalt Wasserstein bildet und die Gefahr besteht, dass die Spindel mit der Zeit schwergängig wird oder gar festsitzt.

## Patentansprüche

1. Vorrichtung zum Verteilen von Flüssigkeiten, insbesondere Wasser, bei Trink- und Brauchwasseranlagen, Warmwasser-Heizungsanlagen oder dergleichen, mit einem Verteilerrohr (2) und mit mindestens einem radial zu dem Verteilerrohr (2) angeordneten Anschluss (3) für eine Abgangsleitung sowie mit einem dieser achsparallel zugeordneten Absperrventil (1, 1a), wobei das Absperrventil (1, 1a) aus einem Ventilunterteil (4, 4a), das eine Führung für die mittels eines Handrades (13, 13a) betätigbare Ventilspindel (10, 10a) mit dem Ventilkopf (11, 11a) bildet und aus einem diesem bezüglich des Verteilerrohres (2) gegenüberliegenden Ventiloberteil (5, 5a) besteht, an dem der Ventilsitz (6) gebildet ist,
**gekennzeichnet durch** folgende Merkmale:
- die Ventilspindel (10, 10a) des Absperrventils (1, 1a) weist eine axiale Bohrung (15, 15a) auf, die eine Entleerungsleitung für die Abgangsleitung bildet und ihrerseits **durch** ein Entleerventil (16, 16a) verschließbar ist,
- die axiale Bohrung (15, 15a)ist über die Länge der Spindel (10, 10a) durchgehend und das Entleerventil (16, 16a) ist konzentrisch zu dieser mit achsparalleler Bewegungsrichtung angeordnet und
- das Entleerventil (16, 16a) umfasst seinerseits eine Ventilspindel (19, 19a), die an einem Ende einen Ventilkopf (18, 42) trägt, der gegen einen im Verlauf der Bohrung (15, 15a) **durch** eine Verengung (17, 44) gebildeten Ventilsitz wirkt und die am anderen Ende mit Mitteln zur Betätigung des Ventils versehen ist.

2. Vorrichtung nach Anspruch 1, **dadurch gekennzeichnet, dass** die Verengung (44) am Ventilkopf (11a) des Absperrventils (1a) angeordnet ist.

3. Vorrichtung nach Anspruch 1 oder 2, **dadurch gekennzeichnet, dass** die Ventilspindel (19) des Entleerventils (16) zumindest über einen Teil ihrer Länge mit einem Außengewinde (20) und die Bohrung (15) mit einem entsprechenden Innengewinde versehen ist.

4. Vorrichtung nach einem der Ansprüche 1 bis 3, **dadurch gekennzeichnet, dass** die Ventilspindel (19) des Entleerventils (16) an ihrem dem Ventilkopf (18) gegenüberliegenden Ende mit einem Fuß (21) versehen ist, der ein zur Eintragung eines Drehmoments geeignetes Profil (22) besitzt.

5. Vorrichtung nach einem der Ansprüche 1 bis 4, **dadurch gekennzeichnet, dass** das Handrad (13, 13a) aus einem drehfest mit der Spindel (10, 10a) des Absperrventils (1, 1a) verbindbaren und einen Griffrand aufweisenden äußeren Bedienteil (23, 23a) und einem inneren Deckelteil (26, 26a) besteht.

6. Vorrichtung nach Anspruch 5, **dadurch gekennzeichnet, dass** das äußere Teil (23, 23a) schüsselartig aufgeweitet und das innere Teil (26, 26a) den so gebildeten Hohlraum (25) deckelartig abschließend ausgebildet ist.

7. Vorrichtung nach Anspruch 6, **dadurch gekennzeichnet, dass** das innere Teil (26, 26a) gegenüber dem äußeren Teil (23, 23a) um die Ventilachse verdrehbar ist.

8. Vorrichtung nach einem der Ansprüche 3 bis 7, **dadurch gekennzeichnet, dass** die Spindel (10) des Absperrventils (1) unterhalb der Verengung (17) des Entleerventils (16) mindestens eine in den Hohlraum (25) des Handrades (13) mündende radiale Bohrung (30) als Entleeröffnung aufweist und dass das Handrad (13) mindestens eine Austrittsöffnung (31) besitzt.

9. Vorrichtung nach Anspruch 8, **dadurch gekennzeichnet, dass** die mindestens eine Austrittsöffnung (31) in dem inneren Teil (26) des Handrades (13) vorgesehen ist.

10. Vorrichtung nach einem der Ansprüche 5 bis 9, **dadurch gekennzeichnet, dass** das innere Teil (26, 26a) des Handrades (13, 13a) einen Gehäuseansatz (28, 28a) zur Aufnahme des Fußes (21, 43) der Spindel (19, 19a) des Entleerventils (16, 16a) aufweist.

11. Vorrichtung nach Anspruch 10, **dadurch gekennzeichnet, dass** der Gehäuseansatz (28, 28a) eine stirnseitige Durchbrechung (29, 29a) aufweist.

12. Vorrichtung nach Anspruch 10 oder 11, **dadurch gekennzeichnet, dass** der Gehäuseansatz (28a) den Fuß (43) der Spindel (19a) des Entleerventils (16a) drehfest, aber axial verschieblich umschließt.

13. Vorrichtung nach einem der Ansprüche 5 bis 12, **dadurch gekennzeichnet, dass** das äußere Teil (26a) des Handrades (13a) mit flügelartigen Ansätzen (48) zum Eintragen einer Drehbewegung zur Betätigung des Entleerventils (16a) versehen ist.

14. Vorrichtung nach einem der Ansprüche 1 bis 13, **dadurch gekennzeichnet, dass** die Spindel (19a) des Entleerventils (16a) eine Ventilstange (41) umfasst, die am oberen Ende den Ventilkopf (42) trägt und deren unteres Ende in einem Fußteil (43) drehbar gehalten ist.

15. Vorrichtung nach Anspruch 14, **dadurch gekennzeichnet, dass** das Fußteil (43) hülsenartig ausgebildet und auf das untere Ende der Spindel (10a) des Absperrventils (1a) aufschraubbar ist.

16. Vorrichtung nach Anspruch 14 oder 15, **dadurch gekennzeichnet, dass** das Fußteil (43) Austrittsöffnungen bildende Durchbrechungen (49) aufweist.

17. Vorrichtung nach einem der Ansprüche 1 bis 16, **dadurch gekennzeichnet, dass** das äußere Teil (23, 23a) des Handrades (13, 13a) mittels einer radialen Feststellschraube mit der Spindel (10, 10a) des Absperrventils (1, 1a) verbindbar ist.

18. Vorrichtung nach einem der Ansprüche 1 bis 17, **dadurch gekennzeichnet, dass** das Handrad (13, 13a) aus Kunststoff besteht.

19. Vorrichtung nach einem der Ansprüche 1 bis 18, **dadurch gekennzeichnet, dass** der Ventilkopf (11, 11a) des Absperrventils (1, 1a) an seiner Außenseite eine Dichtfläche (53) aufweist, die im geöffneten Zustand des Absperrventils (1, 1a) mit einer am Ventilunterteil (4) angeordneten Dichtkante (54) zusammenwirkt.

20. Vorrichtung nach Anspruch 19, **dadurch gekennzeichnet, dass** die Dichtfläche (53) an einer Verdickung (52) des Ventilkopfes (11, 11a) gebildet ist.

21. Vorrichtung nach Anspruch 20, **dadurch gekennzeichnet, dass** die Dichtfläche (53) eben und zur zylindrischen Außenfläche des Ventilkopfes (11, 11a) geneigt verläuft.

22. Vorrichtung nach einem der Ansprüche 19 bis 21, **dadurch gekennzeichnet, dass** die Dichtkante (54) an einer abgetreppten Ausnehmung (55) am oberen Innenrand des Ventilunterteils (4) gebildet ist.

## Claims

1. An apparatus for distributing liquids, in particular water, in drinking water and service water installations, hot-water heating installations or the like, having a distributor pipe (2) and having at least one connector (3) arranged radially to the distributor pipe (2) for a discharge duct and also having an associated shut-off valve (1,1a) axially parallel thereto, wherein the shut-off valve (1,1a) comprises a valve lower part (4,4a) which has a valve head (11,11a) and which forms a guide for the valve spindle (10,10a) which can be actuated by a handwheel (13,13a), and comprises a valve upper part (5,5a) which is situated opposite the latter with respect to the distributor pipe (2) and on which the valve seat (6) is formed,
**characterised by** the following features:
- the valve spindle (10,10a) of the shut-off valve (1,1a) has an axial bore (15,15a) which forms a drain duct for the discharge duct and, in turn, can be closed by a drain valve (16,16a),
- the axial bore (15,15a) is continuous over the length of the spindle (10,10a) and the drain valve (16,16a) is arranged concentrically to the latter with an axially parallel movement direction, and
- the drain valve (16,16a) comprises, in turn, a valve spindle (19,19a) which, at one end, is provided with a valve head (18,42) which acts against a valve seat formed in the course of the bore (15,15a) by a constriction (17,44) and which, at the other end, is provided with means for actuating the valve.

2. An apparatus according to Claim 1, **characterised in that** the constriction (44) is disposed on the valve head (11a) of the shut-off valve (1a).

3. An apparatus according to Claim 1 or 2, **characterised in that** the valve spindle (19) of the drain valve (16) is provided at least over part of its length with an external screw-thread (20) and the bore (15) is provided with a corresponding internal screw-thread.

4. An apparatus according to any one of Claims 1 to 3, **characterised in that** the valve spindle (19) of the drain valve (16) is provided at its end opposite the valve head (18) with a base (21) which has a profile suitable for the application of a torque.

5. An apparatus according to any one of Claims 1 to 4, **characterised in that** the handwheel (13,13a) comprises an outer operating part (23,23a) which can be connected to the spindle (10,10a) of the shut-off valve (1,1a) in a manner precluding relative rotation and which has a grip rim, and also comprises an inner cover part (26,26a).

6. An apparatus according to Claim 5, **characterised in that** the outer part (23,23a) is widened in a dish-shaped manner and the inner part (26,26a) is designed so as to close in the manner of a cover the hollow space (25) thus formed.

7. An apparatus according to Claim 6, **characterised in that** the inner part (26,26a) is rotatable about the valve axis relative to the outer part (23,23a).

8. An apparatus according to any one of Claims 3 to 7, **characterised in that** the spindle (10) of the shut-off valve (1) has below the constriction (17) of the drain valve (16) at least one radial bore (30) as a drain opening discharging into the hollow space (25) of the handwheel (13), and **in that** the handwheel (13) has at least one outlet opening (31).

9. An apparatus according to Claim 8, **characterised in that** the at least one outlet opening (31) is provided in the inner part (26) of the handwheel (13).

10. An apparatus according to any one of Claims 5 to 9, **characterised in that** the inner part (26,26a) of the handwheel (13,13a) has a housing extension (28,28a) to accommodate the base (21,43) of the spindle (19,19a) of the drain valve (16,16a).

11. An apparatus according to Claim 10, **characterised in that** the housing extension (28,28a) has an opening (29,29a) at the end face.

12. An apparatus according to Claim 10 or 11, **characterised in that** the housing extension (28a) encloses in a manner precluding relative rotation but axially displaceably the base (43) of the spindle (19a) of the drain valve (16a).

13. An apparatus according to any one of Claims 5 to 12, **characterised in that** the outer part (26a) of the handwheel (13a) is provided with wing-like projections (48) for the application of a rotating movement to actuate the drain valve (16a).

14. An apparatus according to any one of Claims 1 to 13, **characterised in that** the spindle (19a) of the drain-valve (16a) comprises a valve stem (41) which at the upper end is provided with the valve head (42) and the lower end of which is retained rotatably in a base part (43).

15. An apparatus according to Claim 14, **characterised in that** the base part (43) is sleeve-shaped and can be screwed on to the lower end of the spindle (10a) of the shut-off valve (1a) .

16. An apparatus according to Claim 14 or 15, **characterised in that** the base part (43) has openings (49) forming outlet orifices.

17. An apparatus according to any one of Claims 1 to 16, **characterised in that** the outer part (23,23a) of the handwheel (13,13a) can be connected by means of a radial clamping screw to the spindle (10,10a) of the shut-off valve (1,1a).

18. An apparatus according to any one of Claims 1 to 17, **characterised in that** the handwheel (13,13a) consists of plastics material.

19. An apparatus according to any one of Claims 1 to 18, **characterised in that** the valve head (11,11a) of the shut-off valve (1,1a) has on its outside a sealing face (53) which in the open position of the shut-off valve (1,1a) cooperates with a sealing edge (54) disposed on the valve lower part (4).

20. An apparatus according to Claim 19, **characterised in that** the sealing face (53) is formed on a thickened portion (52) of the valve head (11,11a).

21. An apparatus according to Claim 20, **characterised in that** the sealing face (53) extends flat and inclined relative to the cylindrical outer surface of the valve head (11,11a).

22. An apparatus according to any one of Claims 19 to 21, **characterised in that** the sealing edge (54) is formed on a stepped recess (55) on the upper inner rim of the valve lower part (4).

## Revendications

1. Dispositif de distribution de liquides, notamment d' eau pour circuits d' eau potable et sani tai re, circuits de chauffage à circulation d'eau chaude ou similaires, constitué d'un conduit distributeur (2) avec au moins un branchement (3), disposé radialement par rapport au conduit distributeur (2), destiné à un départ de conduite, ainsi qu' un robinet d' arrêt (1, 1a) affecté parallèlement à l' axe de ce dernier, le robinet d' arrêt (1, 1a) étant constitué d' une partie inférieure (4, 4a) de robinet formant avec la tête de robinet (11, 11a) un guidage pour un axe de robinet (10, 10a) actionnable par une roue à main (13, 13a) et d'une partie supérieure (5, 5a) de robinet située, par rapport au conduit distributeur (2), à l'opposé de la tête de robinet (11, 11a), et sur laquelle est formé le siège (6), **caractérisé par** les points suivants :
- l'axe (10, 10a) du robinet d'arrêt (1, 1a) présente un perçage axial (15, 15a) formant un conduit de purge pour le départ de conduite lequel peut, pour sa part, être fermé par une soupape de purge (16, 16a),
- le perçage axial (15, 15a) est continu sur toute la longueur de l' axe (10, 10a) et 1a soupape de purge (16, 16a) est disposée de manière concentrique par rapport à celui-ci, selon un sens de déplacement parallèle à l' axe et
- la soupape de purge (16, 16a) comprend pour sa part un axe (19, 19a) supportant à une extrémité une tête (18, 42) qui agit contre un siège formé par un rétrécissement (17, 44) dans le tracé du perçage (15, 15a) et qui est muni à l'autre extrémité de moyens d' actionnement de la soupape.

2. Dispositif selon la revendication 1 **caractérisé en ce que** le rétrécissement (44) est disposé sur la tête (11a) du robinet d'arrêt (1a).

3. Dispositif selon la revendication 1 ou 2 **caractérisé en ce que** l' axe (19) de la soupape de purge (16) est munie au moins sur une partie de sa longueur, d'un filetage extérieur (20) et **en ce que** le perçage (15) est muni d'un filetage intérieur correspondant.

4. Dispositif selon l'une des revendications 1 à 3 **caractérisé en ce que** l'axe (19) de la soupape de purge (16) est muni à son extrémi té opposée à la tête (18) d' une embase (21) qui possède un profil (22) adapté afin de permettre un moment de rotation.

5. Dispositif selon l'une des revendications 1 à 4 **caractérisé en ce que** la roue à main (13, 13a) est constituée d'une pièce d'actionnement (23, 23a) extérieure, présentant un bord de manipulation et pouvant être associée de manière fixe en rotation avec l'axe (10, 10) du robinet d'arrêt (1, 1a) ainsi que d'une partie (26, 26a) intérieure formant couvercle.

6. Dispositif selon la revendication 5 **caractérisé en ce que** la partie extérieure (23, 23a) s'évase à la manière d' une coupelle et que la partie intérieure (26, 26a) est conformée pour fermer à la manière d' un couvercle l'espace creux (25) ainsi formé.

7. Dispositif selon la revendication 6 **caractérisé en ce que** la partie intérieure (26, 26a) peut, par rapport à la partie extérieure (23, 23a), tourner sur l'axe du robinet.

8. Dispositif selon l'une des revendications 3 à 7
**caractérisé en ce que** l'axe (10) du robinet d'arrêt (1) possède sous le rétrécissement (17) de la soupape de purge (16) au moins un perçage (30) radial faisant office d'orifice de purge et débouchant dans l'espace creux (25) de la roue à main (13) et **en ce que** la roue à main (13) possède au moins un orifice de sortie (31).

9. Dispositif selon la revendication 8 **caractérisé en ce qu'**il est prévu au moins un orifice de sortie (31) dans la partie intérieure (26) de la roue à main (13).

10. Dispositif selon l'une des revendications 5 à 9 **caractérisé en ce que** la partie intérieure (26, 26a) de la roue à main (13, 13a) présente un talon (28, 28a) de logement pour l'embase (21, 43) de l'axe (19, 19a) de la soupape de purge (16, 16a).

11. Dispositif selon la revendication 10 **caractérisé en ce que** le talon (28, 28a) de logement présente une percée (29, 29a) du côté frontal.

12. Dispositif selon les revendications 10 ou 11 **caractérisé en ce que** le talon (28a) de logement englobe l'embase (43) de l'axe (19a) de la soupape de purge (16a) de manière à être fixe en rotation mais en restant décalable axialement.

13. Dispositif selon l'une des revendications 5 à 12 **caractérisé en ce que** la partie extérieure (26a) de la roue à main (13a) est munie de décrochements (48) du type ailettes, afin de permettre un mouvement de rotation visant à actionner la soupape de purge (16a).

14. Dispositif selon l' une des revendications 1 à 13 **caractérisé en ce que** l'axe (19a) de la soupape de purge (16a) comprend une tige (41) supportant à son extrémité supérieure la tête (42) et dont l'extrémité inférieure est maintenue de manière rotative dans une pièce d'embase (43).

15. Dispositif selon la revendication 14 **caractérisé en ce que** la pièce d'embase (43) est conformée en douille et qu'elle peut être vissée sur l'extrémité inférieure de l'axe (10a) du robinet d'arrêt (1a).

16. Dispositif selon la revendication 14 ou 15 **caractérisé en ce que** la pièce d'embase (43) présente des percées (49) formant des orifices de sortie.

17. Dispositif selon l'une des revendications 1 à 16 **caractérisé en ce que** la pièce extérieure (23, 23a) de la roue à main (13, 13a) peut être reliée à l'axe (10, 10a) du robinet d'arrêt (1, 1a) au moyen d' une vis de blocage radiale.

18. Dispositif selon l' une des revendications 1 à 17 **caractérisé en ce que** la roue a main (13, 13a) est constituée de matière plastique.

19. Dispositif selon l'une des revendications 1 à 18 **caractérisé en ce que** la tête (11, 11a) du robinet d'arrêt (1, 1a) présente sur sa face extérieure une surface d' étanchéité (53) qui, en situation d'ouverture du robinet d'arrêt (1, 1a), agi t conjointement avec une arête d'étanchéité (54) disposée sur la partie inférieure (4) .

20. Dispositif selon la revendication 19 **caractérisé en ce que** la surface d' étanchéité (53) est formée sur un épaississement (52) de la tête (11, 11a).

21. Dispositif selon la revendication 20 **caractérisé en ce que** la surface d'étanchéité (53) s'étend de manière plane et est inclinée vers la surface cylindrique extérieure de la tête (11, 11a).

22. Dispositif selon l'une des revendications 19 à 21 **caractérisé en ce que** l'arête d' étanchéité (54) est formée sur un évidement (55) en escalier, sur le bord intérieur supérieur de la partie inférieure (4).
